# EUROPEAN PATENT SPECIFICATION

(11) **EP 3 054 818 B1**
(45) Date of publication and mention of the grant of the patent: **02.09.2020**
(21) Application number: 14790256.3
(22) Date of filing: 09.10.2014
(51) Int. Cl.: A47J 19/02, B02C 18/30

(54) **ICE-CRUSHING ATTACHMENT FOR A MULTI-PURPOSE KITCHEN MACHINE**
EISCRUSHERAUFSATZ FÜR EINE MEHRZWECKKÜCHENMASCHINE
ACCESSOIRE DE BROYAGE DES GLAÇONS POUR ROBOT MÉNAGER MULTIFONCTIONS

(30) Priority: 09.10.2013 GB 201317834
(43) Date of publication of application: 17.08.2016
(73) Proprietor: Kenwood Limited, Havant, Hampshire PO9 2NH (GB)
(72) Inventor: VACHER, Daniel, Hampshire PO9 2NH (GB)
(74) Representative: Hector, Annabel Mary
(86) International application number: PCT/GB2014/053040
(87) International publication number: WO 2015/052522

(56) References cited:
- CN-U- 201 930 837
- GB-A- 1 521 786
- US-A- 3 791 597

## Description

This invention relates to an ice-crushing attachment for a multi-purpose kitchen machine.

Ice-crushing is a function that is often performed in the kitchen by means of a food processing or a blending appliance, in which a bladed tool is rotated rapidly within a receptacle, such as a bowl or a goblet, to crush or chop blocks of ice loaded into the receptacle.

GB 1 521 786 A (JUPITER GMBH KEUCHENMASCHF) discloses an ice-crushing device having at least one ice-breaker rotatable in a tubular crusher housing.

Some such arrangements utilise bespoke rotating tools that are specially designed for ice crushing, whilst others utilise general purpose tools. It is often the case, however, when using either type of arrangement, that the results are not as required and, in any event, difficulties arise because there is little control over the size and consistency of the crushed ice, whereas the requirements for these parameters are frequently quite different, depending upon the intended usage of the crushed ice.

The invention aims to reduce or eliminate these difficulties.

The invention aims is to provide an ice-crushing attachment for a stand mixer presenting a rotary drive outlet in addition to a planetary drive outlet; the attachment comprising a generally tubular body for attachment to the stand mixer; a rotatable scroll-type extruding tool capable of rotating within the tubular body and provided with means to couple with said rotary drive outlet when the tubular body is attached to the stand mixer; means permitting ice to be introduced into the tubular body and into engagement with the extruding tool for crushing and transport towards an outlet port of the attachment; and a die member, selected from a plurality of die members, fitted to said outlet port and configured to influence the size and/or consistency of said crushed ice as it emerges from said port.

The attachment described above closely resembles a known meat-grinding attachment that is commonly supplied with, or available to purchase separately for use with, a stand mixer. This similarity permits the provision of an extremely efficient and economical ice-crushing arrangement, since all of the components of the standard meat-grinder can be used to crush ice, with the single exception of the dies that are fitted to the output port of the attachment. It will be appreciated that a different set of dies is provided for ice-crushing, and a selected ice-crushing die is used in place of the die normally used for meat-grinding.

According to the invention from another aspect there is provided an attachment for a kitchen machine; the attachment comprising a kit of parts selectively configurable into a meat grinder or an ice-crusher and the kit of parts comprising a common component set including:
(a) a hollow main body part having a processing cavity therein and a scroll-type screw extruder tool which can rotate within the processing cavity when driven by the machine;
(b) a hopper for allowing meat products or ice to be introduced into the processing cavity;
(c) first coupling means for coupling the main body part to co-operative receiving means on the kitchen machine such that said scroll-type processing tool can be driven in rotation by way of a drive outlet on the kitchen machine; and
(d) second coupling means for coupling a selected apertured extrusion die to an output port of said main body part such that processed meat products or ice can exit the attachment via the die;
the kit being characterised by the provision of:
(e) at least one die adapted for use in meat grinding; and
(f) at least one die adapted for use in ice-crushing;
wherein said dies are configured for alternative fitment to said common component set to convert said attachment from a meat-grinding attachment to an ice-crushing attachment, or vice versa.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In order that the invention may be clearly understood and readily carried into effect, one embodiment thereof will now be described, by way of example only, with reference to the accompanying drawings, of which:
Figure 1 shows, in exploded and perspective view, an attachment in accordance with one embodiment of the invention set up as a meat-grinder; and
Figure 2 shows, in perspective view, a set of three dies usable for ice-crushing.

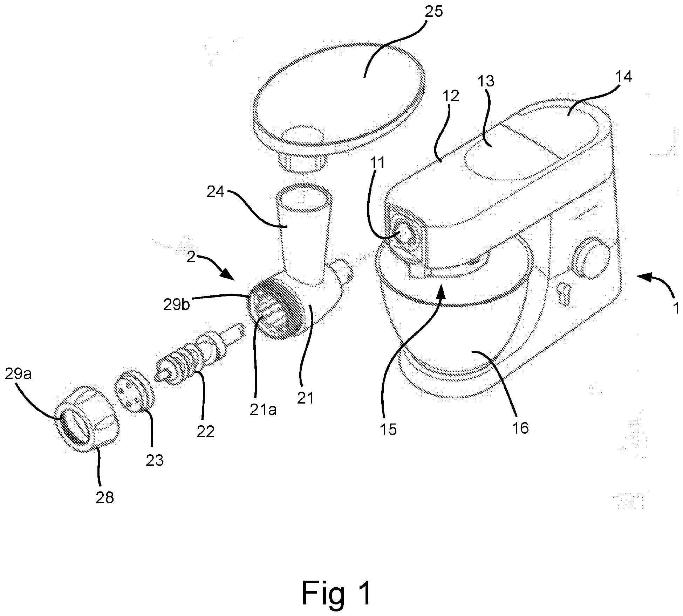

Referring now to Figure 1, a multi-purpose kitchen machine comprising a stand mixer of a kind manufactured and sold by the applicants is shown at 1. The invention, of course, can be used with many different kinds of multi-purpose kitchen machine and the appliance of Figure 1 is shown by way of example only.

The machine 1 presents a relatively low-speed, high torque rotary drive outlet 11 at the front of a head portion 12 thereof; the drive outlet 11 being normally concealed, when not in use, behind a removable trim panel (not shown). Other drive outlets having different characteristics (e.g. speed, torque and/or fixture configuration) are provided, in this example, behind trim panels 13 and 14 on the upper surface of the head 12, and on the underside of the head 12, as indicated by the arrow 15; this latter outlet being typically a planetary drive outlet for a beater or mixer tool which is suspended for use into a bowl 16. Other outlets may be provided instead of, or in addition to, those just described.

It will be appreciated that the drive outlet 11 presents a rotary drive executed about a horizontal drive axis, and this is convenient for use with attachments 2 such as meat grinders, by means of which meat is ground and extruded to emerge forwardly from the attachment through an apertured die, and is allowed to fall into a bowl or other receptacle placed beneath the outlet formed by the die.

The attachment 2 is a dedicated meat-grinding attachment and comprises a generally tubular, hollow housing 21 provided at one end thereof with a fixture complementary to that presented by the outlet 11, enabling the housing 21 of the attachment 2 to be releasably secured to the machine 1, enabling a scroll-like screw extruder device 22 to be rotated by the rotary driver provided at the outlet 11. The device 22 is mounted for rotation within a processing cavity 21a in the housing 21, so as to extrude forwardly, and through a die 23, meat and associated products introduced into the processing cavity in the interior of the housing 21 by way of a feed-tube 24 from a hopper 25. It will be appreciated that, depending upon considerations such as packaging requirements, the feed-tube 24 may be integrally formed with or separate from the housing 21, and likewise the hopper 25 may be integrally formed with or separate from the feed-tube 24.

Typically, several dies such as 23 are provided, each formed with a respective array of apertures, and a die 23, selected to suit the required texture or another characteristic of the ground meat, is fitted to the housing 21.

The extruder device 22 and the die 23 are retained within the housing 21 by means of a nut 28 which is internally threaded as at 29a to screw onto an external threading 29b formed on the forwardly-facing end of the housing 21. Nut 28 may be knurled or otherwise treated to facilitate its turning to fasten the aforementioned components properly in place within the housing 21. Bearing in mind the stresses and strains that can be imparted to various components during extrusion of relatively viscous materials and the heat that can be developed thereby, however, it is often preferred to form the nut 28 with external driving indentations or protrusions designed to be engaged either by a dedicated spanner or by a general purpose spanner (neither shown), to facilitate loosening of the nut 28 from the housing 21.

If desired, a pusher device (not shown) of any convenient design may be provided to enable a user to push meat products through the feed tube 24, to encourage their engagement with the extruder device 22.

In accordance with this embodiment of the invention, the meat-grinding attachment just described with reference to Figure 1 is converted to an ice-crushing attachment by removing the die 23 and replacing it with one of three alternative dies 30, 31 or 32 specifically designed, dimensioned and configured for use when crushing ice. By this means it is possible to provide both attachments in an economical form.

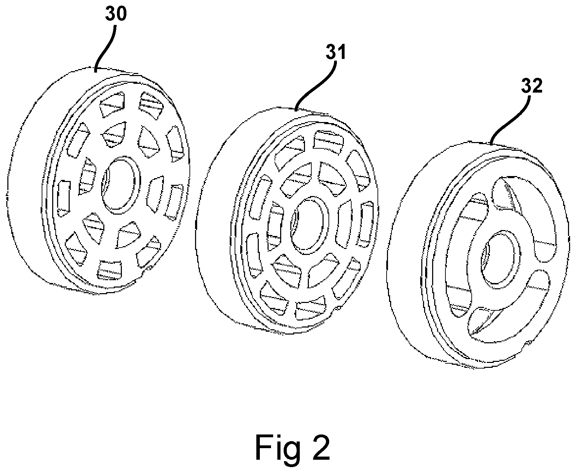

A typical set of dies is shown in Figure 2, manufactured by injection molding from POM thermoplastics material.

In operation, therefore, a set of basic components can be readily converted, by the substitution of dies, from a meat-grinding attachment to an ice-crushing attachment, or vice-versa.

The attachment of this invention is thus in the nature of a kit of parts, selectively configurable into a meat grinder or an ice-crusher drivable by a kitchen machine. The kit is based around a common component set which includes a hollow main body part, formed with a processing cavity within which a scroll-type processing tool can rotate, when driven by the machine, and a hopper for allowing material to be introduced into the processing cavity. The main body part is connectable to the kitchen machine such that the scroll-type processing tool can be rotated by means of a drive outlet on the kitchen machine and moreover has a food output port and a fixing that permits an apertured extrusion die, selected from at least one meat-grinding die and at least one ice-crushing die, to be coupled to the food output port, allowing processed meat products or ice, as the case may be, to be driven out of the food output port by way of the selected die.

If required, the kit of parts can further comprise a pasta-making arrangement of the kind described in our co-pending UK patent application (No. 1317838.9) of even filing date herewith.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. An attachment (2) for a kitchen machine (1); the attachment (2) comprising a kit of parts selectively configurable into a meat grinder or an ice-crusher and the kit of parts comprising a common component set including:
(a) a hollow main body part (21) having a processing cavity (21a) therein and a scroll-type screw extruder tool (22) which can rotate within the processing cavity when driven by the machine (1);
(b) a hopper (25) for allowing meat products or ice to be introduced into the processing cavity (21a);
(c) first coupling means for coupling the main body part (21) to cooperative receiving means on the kitchen machine (1) such that said scroll-type processing tool (22) can be driven in rotation by way of a drive outlet (11) on the kitchen machine (1); and
(d) second coupling means for coupling a selected apertured extrusion die (23) to an output port of said main body part such that processed meat products or ice can exit the attachment via the die (23);
the kit being **characterised by** the provision of:
(e) at least one die (23) adapted for use in meat grinding; and
(f) at least one die adapted for use in ice-crushing;
wherein said dies are configured for alternative fitment to said common component (21) set to convert said attachment (2) from a meat-grinding attachment to an ice-crushing attachment, or vice versa.

## Patentansprüche

1. Aufsatz (2) für eine Küchenmaschine (1); wobei der Aufsatz (2) einen Bausatz von Teilen umfasst, der wahlweise zu einem Fleischwolf oder einem Eiszerkleinerer konfigurierbar ist, und wobei der Bausatz von Teilen einen allgemeinen Komponentensatz umfasst, beinhaltend:
(a) einen hohlen Hauptkörperteil (21), der eine Verarbeitungsaushöhlung (21a) darin aufweist, und ein Schneckenextruderwerkzeug (22) vom Schneckentyp, das sich in der Verarbeitungsaushöhlung drehen kann, wenn es von der Maschine (1) angetrieben wird;
(b) einen Fülltrichter (25), um ein Einbringen von Fleischwaren oder Eis in die Verarbeitungsaushöhlung (21a) zu ermöglichen;
(c) ein erstes Kopplungsmittel zum Koppeln des Hauptkörperteils (21) an ein damit zusammenwirkendes Aufnahmemittel an der Küchenmaschine (1), so dass das Verarbeitungswerkzeug (22) vom Schneckentyp mittels einem Antriebsausgang (11) an der Küchenmaschine (1) drehangetrieben werden kann; und
(d) ein zweites Kopplungsmittel zum Koppeln einer ausgewählten offenen Extrusionsdüse (23) an eine Austrittsöffnung des Hauptkörperteils, so dass verarbeitete Fleischwaren oder verarbeitetes Eis mittels der Düse (23) aus dem Aufsatz austreten können;
wobei der Bausatz **gekennzeichnet ist durch** die Bereitstellung von:
(e) mindestens eine Düse (23), die zur Verwendung bei der Fleischzerkleinerung eingerichtet ist; und
(f) mindestens eine Düse, die zur Verwendung bei der Eiszerkleinerung eingerichtet ist;
wobei die Düsen zum alternativen Anbauen an den allgemeinen Komponentensatz (21) konfiguriert sind, um den Aufsatz (2) von einem Fleischzerkleinerungsaufsatz in einen Eiszerkleinerungsaufsatz oder umgekehrt umzuwandeln.

## Revendications

1. Accessoire (2) pour un robot ménager (1) ; l'accessoire (2) comprenant une trousse de pièces pouvant être configurée sélectivement en un hachoir à viande ou un pileur à glace et la trousse de pièces comprenant un ensemble de composants communs incluant :
(a) une pièce de corps principal creux (21) ayant une cavité de transformation (21a) dans celle-ci et un outil à extruder à vis de type à volute (22) qui peut tourner au sein de la cavité de transformation quand il est entraîné par la machine (1) ;
(b) une trémie (25) destinée à permettre que des produits de viande ou de la glace soient introduits jusque dans la cavité de transformation (21a) ;
(c) un premier moyen de couplage destiné à coupler la pièce de corps principal (21) à un moyen de réception coopérant sur le robot ménager (1) de sorte que ledit outil de transformation de type à volute (22) peut être entraîné en rotation au moyen d'une sortie d'entraînement (11) sur le robot ménager (1) ; et
(d) un deuxième moyen de couplage destiné à coupler une matrice d'extrusion perforée sélectionnée (23) à un orifice de sortie de ladite partie de corps principal de sorte que des produits de viande ou de la glace transformés peuvent sortir de l'accessoire par la matrice (23) ;
la trousse étant **caractérisée par** la fourniture supplémentaire :
(e) d'au moins une matrice (23) conçue pour être utilisée dans le hachage de viande ; et
(f) d'au moins une matrice conçue pour être utilisée dans le pilage de glace ;
dans lequel lesdites matrices sont configurées pour une variante d'ajustement avec ledit ensemble de composants communs (21) pour convertir ledit accessoire (2) d'un accessoire de hachage de viande en un accessoire de pilage de glace, ou inversement.
